# EUROPÄISCHE PATENTSCHRIFT

(11) **EP 0 844 293 B1**
(45) Veröffentlichungstag und Bekanntmachung des Hinweises auf die Patenterteilung: **16.01.2002**
(21) Anmeldenummer: 97810848.8
(22) Anmeldetag: 11.11.1997
(51) Int. Cl.: C09K 19/02, G02F 1/141

(54) **Bistabile ferroelektrische Flüssigkristallzelle**
Bistable ferroelectric liquid crystal cell
Cellule à cristaux liquides ferroélectriques bistables

(30) Priorität: 21.11.1996 CH 287396; 11.02.1997 CH 29497
(43) Veröffentlichungstag der Anmeldung: 27.05.1998
(73) Patentinhaber: Rolic AG, 6301 Zug (CH)
(72) Erfinder: Fünfschilling, Jürg, Prof. Dr., 4054 Basel (CH); Schadt, Martin, Dr., 4411 Seltisberg (CH)
(74) Vertreter: Liebetanz, Michael, Dipl.-Phys.

(56) Entgegenhaltungen:
- EP-A- 0 241 177
- EP-A- 0 309 774
- EP-A- 0 404 081
- EP-A- 0 405 346
- DE-A- 3 630 012
- DE-A- 4 334 460
- FR-A- 2 731 537
- US-A- 4 941 736
- RENFAN SHAO ET AL: "ARE SHORT-PITCH BISTABLE FERROELECTRIC LIQUID CRYSTAL CELLS SURFACE STABILIZED?" LIQUID CRYSTALS, Bd. 14, Nr. 4, 1.Januar 1993, Seiten 1079-1086, XP000383083
- FUNFSCHILLING J ET AL: "NEW SHORT-PITCH BISTABLE FERROELECTRIC (SBF) LIQUID CRYSTAL DISPLAYS" JAPANESE JOURNAL OF APPLIED PHYSICS, Bd. 30, Nr. 4 PART 01, 1.April 1991, Seiten 741-746, XP000263004
- FUNFSCHILLING J ET AL: "FAST RESPONDING AND HIGHLY MULTIPLEXIBLE DISTORTED HELIX FERROELECTRIC LIQUID-CRYSTAL DISPLAYS" JOURNAL OF APPLIED PHYSICS, Bd. 66, Nr. 8, 15.Oktober 1989, Seiten 3877-3882, XP000073911

## Beschreibung

Die Erfindung betrifft eine Flüssigkristallzelle - nachfolgend auch Anzeigezelle genannt - mit einer ferroelektrischen, chiral-smektischen Flüssigkristallschicht, nämlich eine Zelle gemäss dem Oberbegriff des Patentanspruchs 1.

Bekannte Flüssigkristallzellen besitzen eine nematische Flüssigkristall-Konfiguration und werden entsprechend dieser Konfiguration als TN- oder STN-Zellen bezeichnet. Hierbei steht TN für Twisted Nematic und STN für Super Twisted Nematic. Solche Zellen sind für viele Anwendungen ausreichend. Ihre Bildqualität ist jedoch sehr stark vom Blickwinkel des Benutzers abhängig. Des weitern benötigen TN- und STN-Zellen eine permanent anliegende Signalspannung, will man mit diesen Informationen anzeigen oder speichern. Das heisst, diese Zellen sind für eine Speicherung und/oder Darstellung von Daten ohne Energiequelle nicht geschaffen. Ein Beispiel für eine solche Anwendung wäre etwa eine Bank- oder Kreditkarte, welche ohne integrierte Batterie den durch ein Schreib- und Lesegerät auf die Karte übertragenen Kontostand speichern kann.

Flüssigkristallzellen mit einer ferroelektrischen, chiral-smektischen Flüssigkristallschicht gehören einem anderen Zellen-Typ an. Zellen dieser Art besitzen nämlich eine doppelbrechende, nachfolgend auch als S_{c}*-Schicht bezeichnete und gegebenenfalls eine helikale Konfiguration ausbildende Flüssigkristallschicht, welche durch Einwirkung eines elektrischen Feldes so beeinflusst bzw. deformiert werden kann, dass sich ihre optische Anisotropie ändert.

Bekannte ferroelektrische Flüssigkristallzellen besitzen ein Paar transparenter Platten, die zusammen die S_{c}*-Schicht einschliessen, mit je einer die Moleküle der S_{c}*-Schicht ausrichtenden Oberflächenstruktur, mit Elektroden zur Erzeugung eines elektrischen Feldes und je einem Polarisator versehen sind. Die der S_{c}*-Schicht zugewandten Oberflächenstrukturen üben hierbei auf die angrenzenden Flüssigkristallmoleküle eine Richtwirkung aus, so wie das nachfolgend noch näher erläutert wird. Die smektischen Schichten bzw. Ebenen stehen bei ferroelektrischen Flüssigkristallzellen senkrecht auf den Platten. Eine solche Konfiguration wird in der Literatur gelegentlich auch mit der sogenannten Bücherbrett-Struktur umschrieben.

Die für ferroelektrische Anzeigezellen verwendbaren Flüssigkristalle bestehen aus einer Mischung von verschiedenen chemischen Verbindungen. Zu diesen gehören auch sogenannte Dotierstoffe, welche der Mischung den chiralen Charakter verleihen und für die Ferroelektrizität verantwortlich sind. Eine chiral-smektische Flüssigkristall-Mischung zeichnet sich nun insbesondere dadurch aus, dass die zu einer smektischen Schicht gehörenden und zueinander im wesentlichen parallel angeordneten Moleküle nicht senkrecht zur smektischen Ebene, sondern unter einem smektischen Kippwinkel θ zur Ebenen-Normalen angeordnet sind. Die Chiralität der S_{c}*-Schicht führt dazu, dass die Achsen der Flüssigkristallmoleküle von Schicht zu Schicht gegeneinander verdreht sind, so dass sich dadurch eine schraubenförmige Helix mit der Ganghöhe p bildet. Ist eine solche Schraubenstruktur unerwünscht, muss sie durch Wirkung der Berandung oder Modifikation der Bücherbrett-Struktur unterdrückt werden.

Im Ruhezustand, d.h. ohne angelegtes elektrisches Feld, zeigt die ferroelektrische Anzeigezelle eine bestimmte Lichtdurchlässigkeit. Wird an den Elektroden eine Spannung angelegt, so wirken Drehmomente auf die einzelnen smektischen Schichten. Diese Drehmomente bewirken eine Umorientierung der Moleküle und somit eine Umorientierung der einzelnen smektischen Schichten, was eine Rotation der optischen Achse zur Folge hat. Die Rotation der optischen Achse in Abhängigkeit von der angelegten Spannung lässt sich in der Praxis durch Messung des Schaltwinkels α bestimmen.

Chiral-smektische Flüssigkristall-Mischungen besitzen jedoch noch andere Eigenschaften. So zeigen sie eine spontane Polarisation Pₛ, d.h., eine inhärente, spontane Ausrichtung der molekularen Dipolmomente. Das bedeutet, dass ein an der Anzeigezelle angelegtes elektrisches Feld eine starke Wechselwirkung mit dieser spontanen Polarisation zeigt, was eine wesentliche Verkürzung der von TN- und STN-Zellen bekannten Schaltzeiten erlaubt. Eine weitere Eigenheit gekippter smektischer Phasen kommt bei der Bücherbrett-Struktur zum Tragen, bei welcher die smektischen Ebenen - wie bereits erwähnt - senkrecht zur Anzeigefläche stehen. Wird die Behandlung der Glasoberfläche hierbei so gemacht, dass sich die Moleküle der smektischen Schichten parallel zur Berandung orientieren, gibt es offensichtlich zwei Möglichkeiten, wie die Moleküle in bezug auf die Ebenen-Normale gekippt sein können; nämlich entweder nach vorne oder nach hinten. Beide Stellungen haben dabei denselben Winkel zur Normalen auf die S_{c}-Ebenen, sind also mit der S_{c}-Struktur verträglich. Diese beiden Konfigurationen bzw. Zustände sind die Basis der Bistabilität der S_{c}-Flüssigkristalle, also Grundlage für die Bildungen von bistabilen ferroelektrischen Flüssigkristallzellen.

Ferroelektrische bistabile Flüssigkristallzellen weisen die vorstehend genannten Nachteile von nematischen Anzeigen nicht auf. So besitzen sie eine geringe Blickwinkelabhängigkeit und können von der Energiequelle getrennt werden, sobald die Information eingeschrieben ist.

Die Ferroelektrizität der S_{c}*-Schicht erlaubt bei bistabilen Flüssigkristallzellen zwischen den beiden Konfigurationen bzw. Zuständen hin und her zu schalten. Gleichzeitig bewirken die spontan ausgerichteten Dipolmomente der chiralen Dotierstoffe die spontane Polarisation Pₛ, welche ihrerseits stark auf ein angelegtes elektrisches Feld reagiert. Die Dotierstoffe sind also verantwortlich für die kurzen Schaltzeiten von bistabilen Zellen. Es ist bekannt, dass für eine bistabile Flüssigkristallkonfiguration die Ausbildung einer Helix in einer Form, wie sie etwa bei einer DHF-Zelle (DHF steht hier für: Deformed Helix Ferroelectric) auftritt, unerwünscht ist. So ist der Grösse der spontanen Polarisation Pₛ eine Grenze gesetzt. Die in der Mischung enthaltenen chiralen Moleküle bewirken nämlich nicht nur eine spontane Polarisation, sondern sie verstärken auch die Tendenz zur Verdrehung der S_{c}-Struktur, was nachteilig für eine bistabile Flüssigkristallkonfiguration ist.

Deshalb muss bei denjenigen bistabilen Anzeigezellen, welchen der sogenannte Surface Stabilized Ferroelectric Liquid Crystal (SSFLC) Effekt von Lagerwall und Clark (Appl.Phys.Lett.38,899, 1980) zu Grunde liegt, die Dotierung so niedrig gewählt werden, dass die Wechselwirkung der Moleküle mit der Oberfläche stärker ist als der Einfluss des Drehvermögens der Dotierstoffe, so dass dadurch die Ausbildung der Helix unterdrückt bzw. erschwert wird. Für die Praxis bedeutet dies, dass die Ganghöhe der Helix wesentlich grösser sein muss als die Schichtdicke d der Flüssigkristall-schicht.

Die relativ schwache Stabilisierung der Struktur durch Oberflächenkräfte und die teilweise Kompensierung dieser Kräfte durch das Drehvermögen der Dotierung bedeutet zwar, dass man mit wenig Energie bistabil schalten kann, dafür ist aber der so erreichte Zustand sehr labil. So können schon relativ kleine elektrische oder mechanische Störungen den Zustand "Kippen", d.h., ein Hin- und Herschalten zwischen den beiden bistabilen Konfigurationen auslösen. SSFLC-Anzeigezellen sind daher für eine sichere Langzeitspeicherung schlecht geeignet.

Eine Lösung dieses Problems bietet die sogenannte Shortpitch Bistable Ferroelectric Anzeigezelle (SBFLC). Bei dieser Zelle wird die Flüssigkristallschicht durch elektrische Impulse so formiert, dass eine zick-zack Modulation der smektischen Ebenen erzeugt wird, die die Bildung einer Helix unterdrückt. Damit reagiert diese Zelle deutlicher weniger auf Erschütterungen als die bekannten SSFCL-Zellen. Eine Anzeigezelle dieser Art ist zum Beispiel aus der EP-A 0'405'346 bekannt.

Sowohl die SSFLC- als auch die SBFLC-Anzeigezellen haben einen weiteren gravierenden Nachteil. Bei ihnen brennt die Information ein. Bleibt nämlich die Zelle für längere Zeit im gleichen Zustand so fallen - bedingt durch das elektrische Feld der spontanen Polarisation - ionische Verunreinigungen in Form von Ladungswolken in der Nähe der Kontakte an. Diese Raumladungen und eventuell noch zusätzliche influenzierte Oberflächenladungen verändern den entsprechenden Arbeitspunkt der Zelle für ein weiteres Schalten. Geisterbilder oder sogar der Verlust der Bistabilität sind eine Folge davon. Es hat sich nun gezeigt, dass diese Raumladungseffekte gemildert bzw. entschärft werden könnten, wenn man leitfähige Orientierungsschichten verwendet und auf die bei TN- und STN-Anzeigezellen üblichen, schlecht leitenden oder sogar isolierenden Schichten verzichtet. Der Flüssigkristall hat aber dann eine niederohmige Verbindung zu beiden Kontakten, was die Gefahr von Kurzschlüssen durch Staubpartikel etc. drastisch erhöht.

Eine andere Möglichkeit, Einfluss auf die Helix bzw. Direktorstruktur der S_{c}*-Schicht zu nehmen, ist die Beimischung von polymerisierbaren Molekülen. Die Idee hierbei ist, dass man bei der Formierung bzw. Herstellung der Flüssigkristallzelle durch einen Polymerisierungsprozess die Direktorstruktur in einer optimalen Konfiguration stabilisiert bzw. einfriert. Erreicht wird dies dadurch, dass der Flüssigkristall-Mischung ein kleiner Prozentsatz von polymerisierbaren Molekülen beigemischt wird, welche ihrerseits mindestens ein Reaktionszentrum besitzen und bei einer Bestrahlung mit UV-Licht eine Polymerisationsreaktion auslösen. Durch diese Polymerisation entstehen lange Molekül-Fäden, die sich zu einem dichten Knäuel verwickeln und gegebenenfalls noch zusätzlich querverbinden (was eine Vernetzung zur Folge hat) und dadurch die zu Beginn der Polymerisationsreaktion vorhandene Direktorstruktur einfrieren. Dieser Vorgang ist bereits in der US-A 5'434'685 beschrieben. Allerdings beschränkt sich die in dieser Vorveröffentlichung beschriebene Technik auf SSFCL-Anzeigezellen, also auf Flüssigkristall-Mischungen mit einer langen Ganghöhe p. Bei den in der US-A 5'434'685 offenbarten Flüssigkristallzellen wird zudem immer einer der beiden stabilen Zustände - nämlich der in dem die Flüssigkristall-Mischung polymerisiert wird - stabiler sein als der andere, was beim Betrieb einer so formierten Zelle eine unerwünschte Asymmetrie der nötigen Ansteuerspannungen bedingt und gegebenenfalls sogar den Verlust der Bistabilität zur Folge haben kann. Bei den aus der US-A 5'434'685 bekannten Flüssigkristallzellen kann die Polymerisation schliesslich auch noch eine Phasenseparation auslösen, d.h. der Flüssigkristall fällt in diesem Fall in Form von kleinen Tröpfchen aus. Die von J. W. Doane, D. K. Yang and L. C. Chien in Conf. Reports IDRC, SID, S. 175 (1991) beschriebenen Anzeigezellen sind Beispiele dafür.

Ausgehend von der EP-A 0'405'346 liegt nun der Erfindung die Aufgabe zugrunde, eine bistabile Flüssigkristallzelle bereitzustellen, welche die wesentlichen Vorteile von bistabilen Anzeigezellen besitzt, nämlich eine geringe Blickwinkelabhängigkeit, die kurzen Schaltzeiten und die Möglichkeit der Speicherung von Daten ohne Energiequelle, und zudem die Nachteile der vorstehend genannten bistabilen SSFCL- und SBFCL-Anzeigezellen nicht aufweist.

Diese Aufgabe wird erfindungsgemässe durch eine Flüssigkristallzelle mit den Merkmalen des Patentanspruchs 1 gelöst.

Die Erfindung betrifft des weitern ein Verfahren zur Herstellung einer erfindungsgemässen Flüssigkristallzelle sowie ein Anzeigemittel und eine Karte enthaltend eine solche Flüssigkristallzelle, nämlich ein Verfahren mit den Merkmalen des Anspruchs 9, ein Anzeigemittel mit den Merkmalen des Patentanspruchs 11 und eine Karte nach Anspruch 13.

Vorteilhafte Ausgestaltungen der Erfindung gehen aus den abhängigen Ansprüchen hervor.

Es wurde überraschend gefunden, dass bei geeigneter Parameterwahl und geeigneter Flüssigkristallzusammensetzung die Verwendung von polymerbildenden Molekülen in SBFCL-Anzeigezellen viel grössere Vorteile bietet als man erwartet hat.

Es wurde zudem festgestellt, dass eine Anzeigezelle des Typs SBFCL, welche mit einer polymerbildenden Molekülen enthaltenden Flüssigkristall-Mischung ausgebildet ist, dann zu einer bistabilen Flüssigkristallzelle mit zwei äquivalenten Zuständen formiert werden kann, wenn während des Polymerisationsvorganges die Zelle von beiden Seiten gleich stark beleuchtet und gleichzeitig zwischen den beiden gesättigten Zuständen mittels einer Wechselspannung hin und her geschaltet wird. Gesättigt bedeutet in diesem Fall, dass eine weitere Erhöhung der Wechselspannung weder den Drehwinkel des Brechungsindexellipsoides noch den Betrag der Doppelbrechung Δn merklich ändert. Die symmetrische Bistabilität ist also in diesem Fall eine Signatur dafür, dass die Bedingungen des beidseitigen Beleuchtens und symmetrischen Schaltens während des Polymerisierens eingehalten wurden. Wird die Zelle nämlich nicht von beiden Seiten gleichmässig beleuchtet, wird die S_{c}*-Schicht monostabil oder hat deutlich verschiedene Schaltschwellen für positive bzw. negative Spannungen, was für den Betrieb der Anzeige schädlich ist. Fehlt das symmetrische Schalten, so wird dann derjenige Schaltzustand, der während der Polymerisation häufiger angenommen wird, bevorzugt. Dies führt zu einer unsymmetrischen oder gegebenenfalls monostabilen Flüssigkristallzelle der einleitend genannten Art.

Besonders bevorzugte Ausführungsformen der erfindungsgemässen Flüssigkristallzellen besitzen bei Zimmertemperatur einen spezifischen elektrischen Widerstand ρ von höchstens 2·10⁹ Ωm, vorzugsweise höchstens 10⁹ Ωm, beispielsweise etwa 4·10⁸ Ωm. So wurde nämlich festgestellt, dass bistabile Flüssigkristallzellen mit einem spezifischen elektrischen Widerstand ρ > 2·10⁹ Ωm wesentlich schlechtere Kontraste zeigen, als solche mit einem niedrigeren spezifischen elektrischen Widerstand.

Die Messung des Ohm'schen Widerstandes einer ferroelektrischen Flüssigkristallzelle (bzw. der darin enthaltenen Flüssigkristall-Mischung) wird durch den Beitrag der spontanen Polarisation erschwert. Für den hier vorliegenden Fall lässt er sich aber aus der für jede Flüssigkristallzelle charakteristischen Strom-Spannungskennlinie berechnen. Eine solche Strom-Spannungskennlinie zeigt das nachfolgende Diagramm. Die in diesem Diagramm dargestellte und für eine bevorzugte erfindungsgemässe Flüssigkristallzelle typische Kennlinie wurde mit einer die spontane Polarisation absättigenden 10Hz/20V Dreiecksspannung aufgezeichnet. Aus den Differenzen ΔU und ΔI der an den Umlenkpunkten gemessenen Spannungs- und Stromwerten lässt sich der Ohm'sche Widerstand R = 13 MΩ und daraus - mit Berücksichtigung der Zellgrösse - der spezifische elektrische Widerstand ρ = 4·10⁸ Ωm ermitteln.

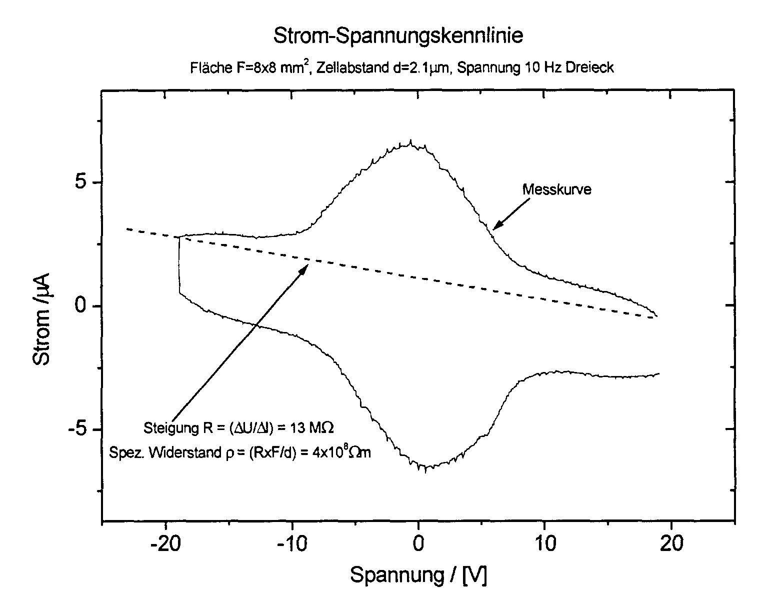

Der spezifische elektrische Widerstand einer Flüssigkristall-Mischungen ist im wesentlichen von der Komponentenzusammensetzung abhängig und lässt sich, falls er zu hoch ist, ohne weiteres durch geeignete Dotierung, so zum Beispiel mit Tetrabutylammoniumjodid, reduzieren.

Im übrigen sei hierbei noch erwähnt, dass die Verwendung von Flüssigkristall-Mischungen mit verhältnismässig niedrigen ρ-Werten auch die industrielle Herstellung der entsprechenden Flüssigkristallzellen erleichtert. So sind etwa für die sogenannten "Feldeffekt-Anzeigen", wie zum Beispiel für die TN-und STN-Zellen, Mischungen mit verhältnismässig hohen ρ-Werten nötig, was die Herstellung solcher Zellen zusätzlich erschwert.

Die erfindungsgemässe Flüssigkristallzelle zeichnet sich durch eine Reihe von Vorteilen aus.
- So erlaubt diese ein absolut gleichwertiges Schalten zwischen zwei stabilen Lagen des Direktors.
- Ein weiterer Vorteil der erfindungsgemässen Zelle ist in einer erhöhten Stabilität der beiden bistabilen Flüssigkristall-Konfigurationen zu sehen. So bleiben diese Konfigurationen bzw. Orientierungen (nicht aber die eingeschriebene Information) auch dann erhalten, wenn man die Flüssigkristallzelle über den Klärpunkt der Flüssigkristall-Mischung erwärmt und nachher wieder abkühlt. Beim Abkühlen bildet sich dabei nämlich wieder dieselbe Orientierung wie vor dem Erwärmen. Diese Eigenschaft erhöht also die Lagertemperatur der erfindungsgemässen Flüssigkristallzelle massiv.
- Ein weiterer Vorteil der Erfindung ist die Möglichkeit, grosse spontane Polarisation (d.h. rasche Schaltgeschwindigkeiten) mit der Verwendung von isolierenden Kontakten zu kombinieren. So lassen sich nämlich bistabile Anzeigezellen mit relativ dicken, isolierenden Orientierungsschichten herstellen. Solche Isolationsschichten mildern den Effekt von lokalen Kurzschlüssen, was bei den kleinen Zellabständen von ferroelektrischen Anzeigen besonders wichtig ist.

Aufgrund der hohen mechanischen Stabilität und den isolierenden Kontakten eignet sich die erfindungsgemässe Flüssigkristallzelle besonders gut für Anwendungen, bei welchen sie starken mechanischen und elektrischen Belastungen ausgesetzt ist. Dazu gehören beispielsweise extrem leichte sowie gegebenenfalls flexible Anzeigemittel, die aus dünnen Plastikscheiben hergestellt werden. So können erfindungsgemässe Flüssigkristallzellen ohne weiteres in Kreditkarten und dergleichen integriert werden. Eine solche Karte kann dann ohne integrierte Energiequelle die durch ein Schreib- und Lesegerät einmal eingeschriebene Information absolut zuverlässig und über längere Zeit speichern.

Im folgenden wird anhand der beiliegenden Zeichnung die Erfindung näher beschrieben. Es zeigen
die Figur 1 eine perspektivische Darstellung eines Ausschnittes aus einer bistabilen Flüssigkristallzelle,
die Figur 2 einen schematischen Schnitt durch eine Flüssigkristallzelle der erfindungsgemässen Art und
die Figur 3 eine schematische Darstellung einer Vorrichtung zur Herstellung von Flüssigkristallzellen enthaltenden Anzeigemitteln aus Kunststoff.

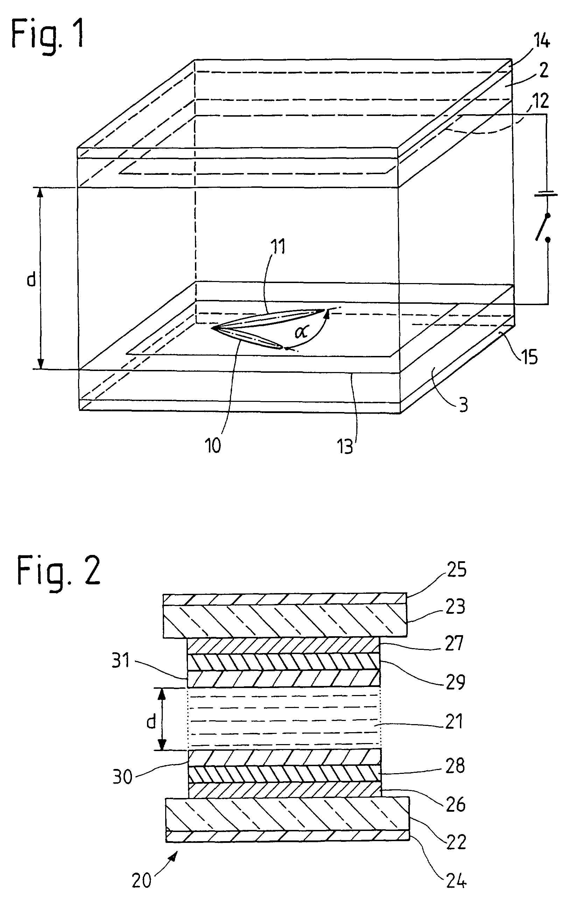

Die Optik von bistabilen, ferroelektrischen Flüssigkristallzellen ist in der Figur 1 vereinfacht dargestellt. Die smektischen Schichten der Flüssigkristallschicht stehen in diesem Fall - wie eingangs bereits erwähnt - senkrecht zu den Platten 2 und 3. Ferner sind die zueinander parallel angeordneten Moleküle jeder Schicht um den eingangs genannten Kippwinkel θ gegen die Ebenen-Normale geneigt.

In der Ebene der Flüssigkristallzelle sind schliesslich die Brechungsellipsoide in den zwei stabilen Zuständen 10 und 11 dargestellt. Wird an den Elektroden 12 und 13 eine Spannung angelegt, so entsteht im Flüssigkristall ein elektrisches Feld, das eine Umorientierung der Moleküle bewirkt. Von der symbolisch gezeichneten Spannungsquelle kommen dabei im praktischen Fall periodische Signale oder auch Ansteuerimpulse, die sowohl bei bekannten wie auch bei der erfindungsgemässen Zelle gegensinnige Polaritäten haben können. Für die Praxis bedeutet dies, dass ein genügend grosses elektrisches Feld den Brechungsindex zum Beispiel von der Stellung 10 in die Stellung 11 schalten. Ein umgekehrtes Feld schaltet ihn wieder zurück. Ist also die Zelle einmal durch ein elektrisches Feld angeregt worden, so befindet sich der Direktor dann - und zwar auch ohne angelegtes elektrisches Feld - in einer der beiden bistabilen Konfigurationen. Diese Konfigurationen können noch relaxieren, d.h., der beobachtete Schaltwinkel α der optischen Achse zwischen den beiden stabilen Lagen ist im allgemeinen kleiner als der von einer unrelaxierten Struktur erwartete Wert des doppelten Kippwinkels θ.

Spannungen kleiner als die sogenannte Schwellenspannung Uₛ können den Brechungsindex nicht schalten. Befindet sich nun eine solche Zelle zwischen zwei gekreuzten Polarisatoren 14 und 15 mit der optischen Achse von Stellung 10 parallel zu einem der beiden Polarisatoren, so ist die Transmission in der Stellung 10 minimal, also dunkel und in der Stellung 11 maximal, also hell. Mit dieser Flüssigkristallzelle kann also zwischen hell und dunkel hin und her geschalten werden. In einem gewissen Spannungsbereich kann auch teilweises Schalten auftreten, so dass dann auch Grauwerte möglich sind. Die Transmission ist dann maximal, wenn der mit α bezeichnete bistabile Schaltwinkel 45° beträgt. Da dieser Schaltwinkel α in den meisten Fällen kleiner ist als der doppelte smektische Kippwinkel θ, sollte dieser grösser als 22,5°, beispielsweise grösser als 25° und vorzugsweise grösser als 30° sein. Die Dicke d der Flüssigkristall-Schicht wird schliesslich so gewählt, dass die optische Gangdifferenz im Grünen ungefähr der halben Wellenlänge des grünen Lichtes entspricht.

Bevor nun die Herstellung der erfindungsgemässen Flüssigkristallzelle näher erläutert wird, soll der allgemeine Aufbau einer solchen Zelle näher beschrieben werden.

Die in der Figur 2 dargestellte und als ganzes mit 20 bezeichnete bistabile Flüssigkristallzelle besitzt eine S_{c}*-Schicht 21, die zwischen zwei zueinander parallelen Platten oder Folien 22 und 23 aus lichtdurchlässigem Material angeordnet ist. Als lichtdurchlässiges Material für die parallelen Platten bzw. Folien 22 und 23 kommen zum Beispiel Glas, Acrylglas oder Kunststoff-Folien in Frage. Die Helixganghöhe p der Flüssigkristallschicht ist dabei so gewählt, dass sie kleiner ist als die Schichtdicke d der unpolymerisierten Flüssigkristallschicht 21 in zellfreiem Zustand.

Auf der Aussenseite der unteren Platte 22 befindet sich ein Polarisator 24, der vorzugsweise mit der Platte 22 verbunden, beispielsweise auf dieser aufgeklebt ist. Entsprechend ist der oberen Platte 23 in analoger Weise ein Polarisator 25 zugeordnet. Alternativ können diese Polarisatoren auch innerhalb der Zelle angeordnet oder sogar durch die Platten 22 und 23 vorgegeben sein, wenn diese beispielsweise aus einem Kunststoff bestehen, der ausgerichtete dichroitische Farbstoffmoleküle enthält.

Auf ihren der Flüssigkristallschicht 21 zugewandten Oberflächen sind die Platten 22 und 23 mit durchsichtigen Elektroden 26 und 27 und gegebenenfalls noch zusätzlich mit je einer Isolationsschicht 28 bzw. 29 versehen.

Die aus je einer Platte oder Folie, einem Polarisator, einer Elektrode und einer Isolationsschicht gebildeten Träger sind an ihrer der S_{c}*-Schicht zugewandten Seite zudem so behandelt, dass sie auf die angrenzenden Flüssigkristallmoleküle und somit auf die gesamte Flüssigkristallschicht eine Richtwirkung ausüben und damit die Richtung des Direktors bestimmen. Diese Behandlung besteht beispielsweise im Beschichten mit einer Polymerschicht mit anschliessendem Reibprozess. Ein weiteres Orientierungsverfahren ist zum Beispiel das Scheren der Flüssigkristallschicht. Andere Möglichkeiten sind das Schrägaufdampfen orientierender Schichten. Solche Schichten sind in der Figur 2 dargestellt und mit 30 und 31 bezeichnet.

In einer bevorzugten Ausführungsform der Erfindung ist einer der beiden Polarisatoren, zum Beispiel der Polarisator 24, so angeordnet, dass seine Polarisationsrichtung zur optischen Achse der in der Figur 1 gezeichneten und mit 10 bezeichneten ersten bistabilen Konfiguration parallel und der zur anderen Platte 23 gehörende Polarisator 25 gegen den Polarisator 24 um einen Winkel von 90° gedreht ist. Diese Ausrichtung der Polarisatoren 24 und 25 stellt ein bevorzugtes Ausführungsbeispiel dar. Es sind durchaus auch andere Polarisator-Anordnungen möglich, mit denen ebenfalls gute Ergebnisse erzielbar sind. Solche lassen sich dabei ohne weiteres durch einfaches Optimieren bestimmen.

Die für den erfindungsgemässen Zweck verwendbare, unpolymerisierte Flüssigkristall-Mischung zeichnet sich durch eine spontane Polarisation Ps > 50nC/cm², eine Ganghöhe p < d und einen smektischen Kippwinkel θ > 25° aus. Die erfindungsgemässe Mischung enthält des weitern etwa 1 bis 20 Gew.% polymerisierbare Moleküle, das heisst Moleküle mit mindestens einem Reaktionszentrum, das durch ein Acrylat, oder Epoxid oder eine andere dem Fachmann bekannte Struktur gebildet wird.

Des weitern kann die Mischung Initiatoren enthalten, die Licht einer bestimmten Wellenlänge absorbieren und dann die Polymerisationsreaktion auslösen. Die Mischung kann aber auch Inhibitoren enthalten, die unerwünschte thermische Reaktionen der Reaktionszentren unterdrücken.

Ein Beispiel einer erfindungsgemässen Flüssigkristall-Mischung ist in der am Ende angefügten zweiteiligen Tabelle dargestellt, wobei die mit A bezeichneten Verbindungen chirale Dotierstoffe, das mit B bezeichnete Molekül eine polymerisierbare Verbindung, das mit C bezeichnete Molekül einen Inhibitor und die mit D bezeichnete Verbindung einen Photoinitiator darstellen.

Nachfolgend soll nun das Herstellungsverfahren einer erfindungsgemässen Flüssigkristallzelle näher erläutert werden.

Zur Herstellung der erfindungsgemässen Flüssigkristallzelle wird die ferroelektrische Flüssigkristall-Mischung im unvernetzten Zustand in eine vorbereitete Zelle mit einer Zelldicke d von etwa 2 µm gefüllt. Dies kann in bekannter Art und Weise durch Kapillarwirkung erfolgen, und zwar bei einer Temperatur von etwa 90°C. Wenn die Orientierungsschichten der vorbereiteten Zelle nicht ausreichen, die gewünschte Richtwirkung über die ganze Dicke der Zelle zu erreichen, kann diese durch Anlegen einer Wechsel- oder Gleichspannung noch zusätzlich verbessert werden. Dies lässt sich zum Beispiel mittels einer Rechteckspannung von ±10V/1kHz erreichen, welche während des anschliessenden Abkühlvorganges für etwa 5 min an die Zelle angelegt wird. Ist die Flüssigkristall-Mischung zwischen den beiden Platten mit der gewünschten Qualität orientiert, wird die Polymerisation durch Licht ausgelöst, wozu die beiden Seiten der Zelle zum Beispiel während 15 min gleichmässig mit einer Quecksilberlampe (mit etwa dem Spektrum und der Intensität von Tageslicht) beleuchtet werden. Während dieser Beleuchtungsphase wird erneut eine Rechteckspannung, in diesem Falle aber eine symmetrische Rechteckspannung von zum Beispiel ±30V/100Hz, an die Zelle angelegt. Diese zum symmetrischen Schalten dienende Wechselspannung besitzt vorzugsweise eine Amplitude, die um höchstens 10% kleiner ist als die Amplitude der Sättigungsspannung, und eine Periode, welche kleiner ist, als die Zeit in der etwa 0,1% der Polymerisationsreaktion abläuft.

Eine derart formierte Flüssigkristallzelle ist bistabil und schaltet mit einem hohen Kontrast von zum Beispiel 20:1, wenn sie mit bipolaren Pulsen angesteuert wird. Die bipolare Pulsfolge besteht hierbei zum Beispiel aus einem 3 ms langen Puls mit einer Amplitude von -15 V gefolgt von einem 3 ms langen Puls mit einer Amplitude von +15 V für den einen Schaltprozess und aus denselben Pulsen in umgekehrter Reihenfolge für den Rückschaltprozess.

Eine bevorzugte Ausführungsform einer formierten Anzeigezelle zeichnet sich dadurch aus, dass
- die beiden bistabilen Schaltzustände einen Schaltwinkel einschliessen, der um mindestens 7° kleiner ist, als der Schaltwinkel, der bei gesättigtem Schalten beobachtet wird,
- der Betrag der Doppelbrechung Δn der beiden bistabilen Zustände mindesten 5% kleiner ist, als bei der elektrisch gesättigten Flüssigkristallschicht, und
- sich die positiven und negativen Schwellenspannungen Uₛ um nicht mehr als 20% voneinander unterscheiden.

Man beachte, dass die bistabilen Zustände nicht einfach die fixierten Schaltzustände sind. Wird an die Anzeigezelle nämlich eine hohe Spannung angelegt, wird der maximale Schaltwinkel und die maximale Doppelbrechung angenommen. Legt man nun eine Spannung deutlich unterhalb der Schaltschwelle an, so relaxiert die Anzeigezelle in den bistabilen Zustand, der einen kleineren Schaltwinkel und eine kleinere Doppelbrechung besitzt. Diese Eigenschaft ist charakteristisch für die erfindungsgemässe Anzeigezelle.

Es sei an dieser Stelle noch darauf hingewiesen, dass die vorstehend beschriebene Flüssigkristallzelle nur eine Auswahl von mehreren möglichen Ausführungsformen der Erfindung darstellt und dass die erfindungsgemässe Anzeigezelle sowohl in Transmission als auch in Reflexion betrieben werden und dementsprechend ausgebildet sein kann.

Selbstverständlich kann die erfindungsgemässe Anzeigezelle auch als farbige Anzeige ausgebildet sein und dazu noch zusätzlich und in bekannter Art und Weise mit den dazu nötigen Mitteln und Farbfiltern ausgerüstet sein.

Wie bereits erwähnt, eignet sich die erfindungsgemässe Flüssigkristallzelle für den Einbau in zum Beispiel Bank- und Kreditkarten. Andere "Plastik-Karten", welche zur Speicherung von Informationen dienen und daher ebenfalls mit einer solchen Anzeigezelle ausgerüstet werden können sind Ausweise, wie etwa Identitätskarten, Abonnements und dergleichen.

Eine anderer Verwendung der erfindungsgemässen Flüssigkristallzelle ist schliesslich in einem Anzeigemittel zu sehen, welches zur Darstellung von Daten und Informationen bestimmt ist und zum Beispiel in Kaufhäusern, Bahnhöfen und Flughäfen als Anzeigetafel eingesetzt werden kann.

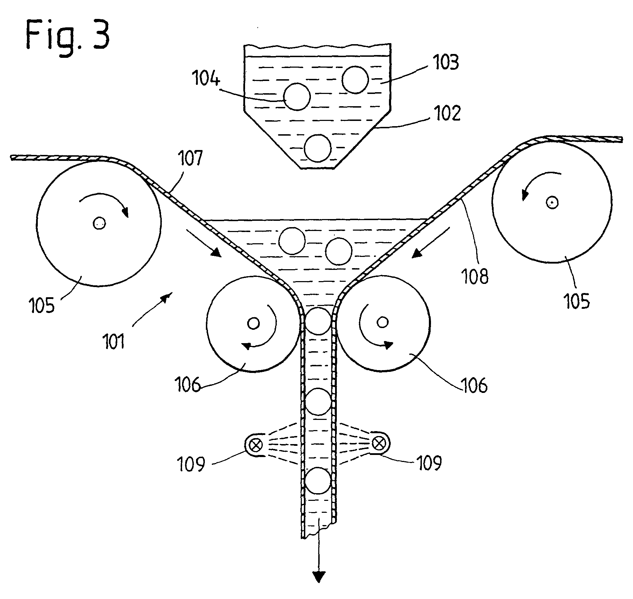

Die Figur 3 zeigt nun skizzenartig eine Einrichtung zur Herstellung von erfindungsgemässen Anzeigezellen. Die für den kontinuierlichen Betrieb vorgesehene Einrichtung weist im wesentlichen eine Zufuhranlage 101 auf. Diese besitzt einen Speicher 102, der eine Flüssigkristallmischung 103 enthält. In dieser Mischung ist zudem ein Stoff 104 (z.B. Polymerkügelchen) gelöst, der dazu dient, dass bei der Herstellung der Anzeigezellen eine bestimmte Schichtdicke d eingehalten wird.

Zur Zufuhranlage 101 gehören noch beheizte Rollen 105 und 106, welche zwei über sie geführte Folienbahnen 107 und 108 in eine zueinander trichterartige Position bringen. Zwischen die über die Rollen 106 senkrecht nach unten geführten Folienbahnen 107 und 108, welche ihrerseits mit den erwähnten Schichten versehen sind, kann man nun fortlaufend die Flüssigkristall-Mischung 103 eingiessen. Die Scherwirkung des Rollprozesses der Rollen 106 bewirken dabei eine zusätzliche Orientierung der Flüssigkristallschicht und die Lampen 109 die vorstehend diskutierte Polymerisation. Aus dem so hergestellte Folienband kann man dann mehrere Anzeigezellen der vorgenannten Art herausschneiden, sofern dieses Folienband zuvor abschnittsweise geprägt und randseitig verschweisst bzw. laminiert wird.

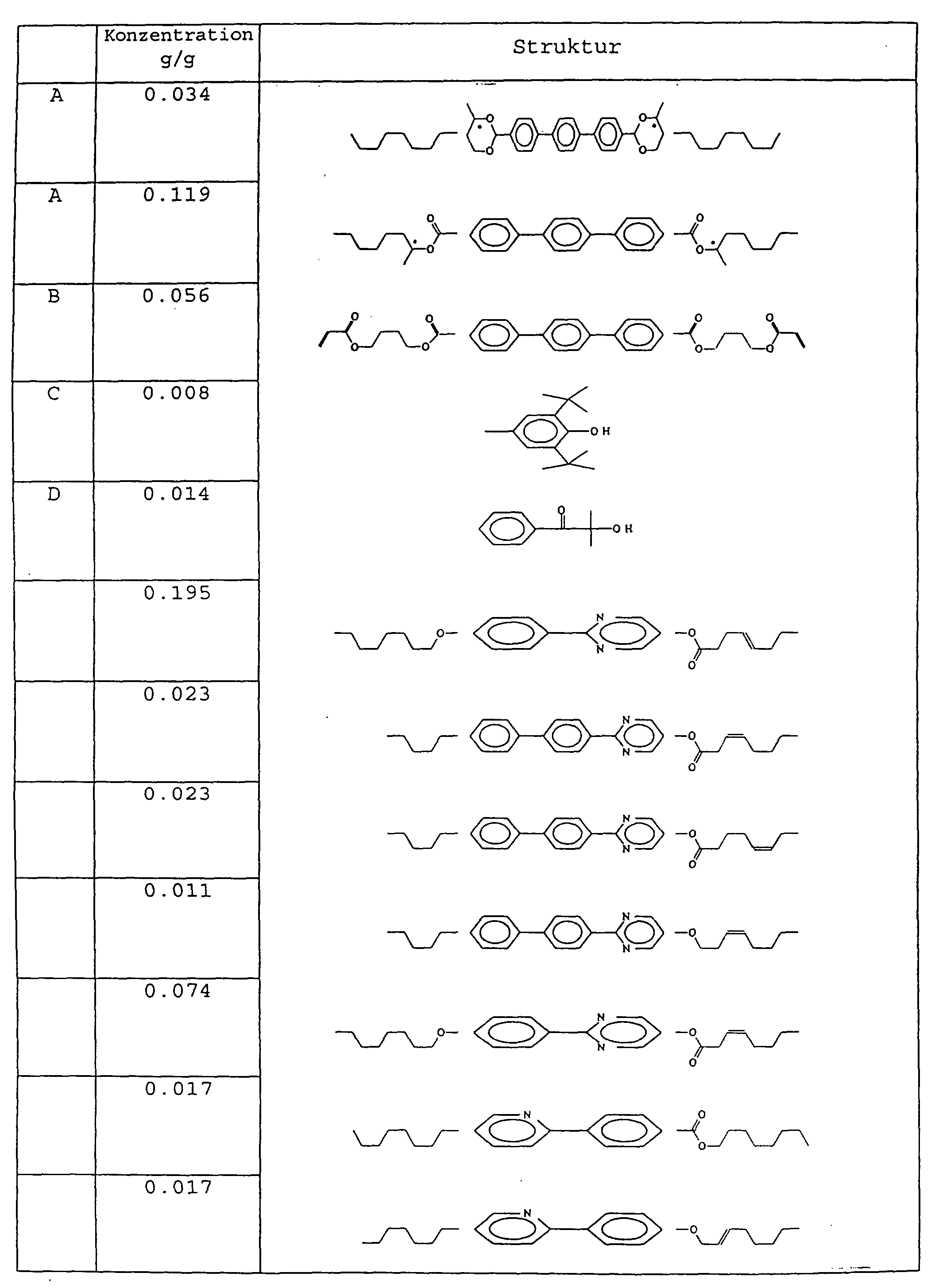

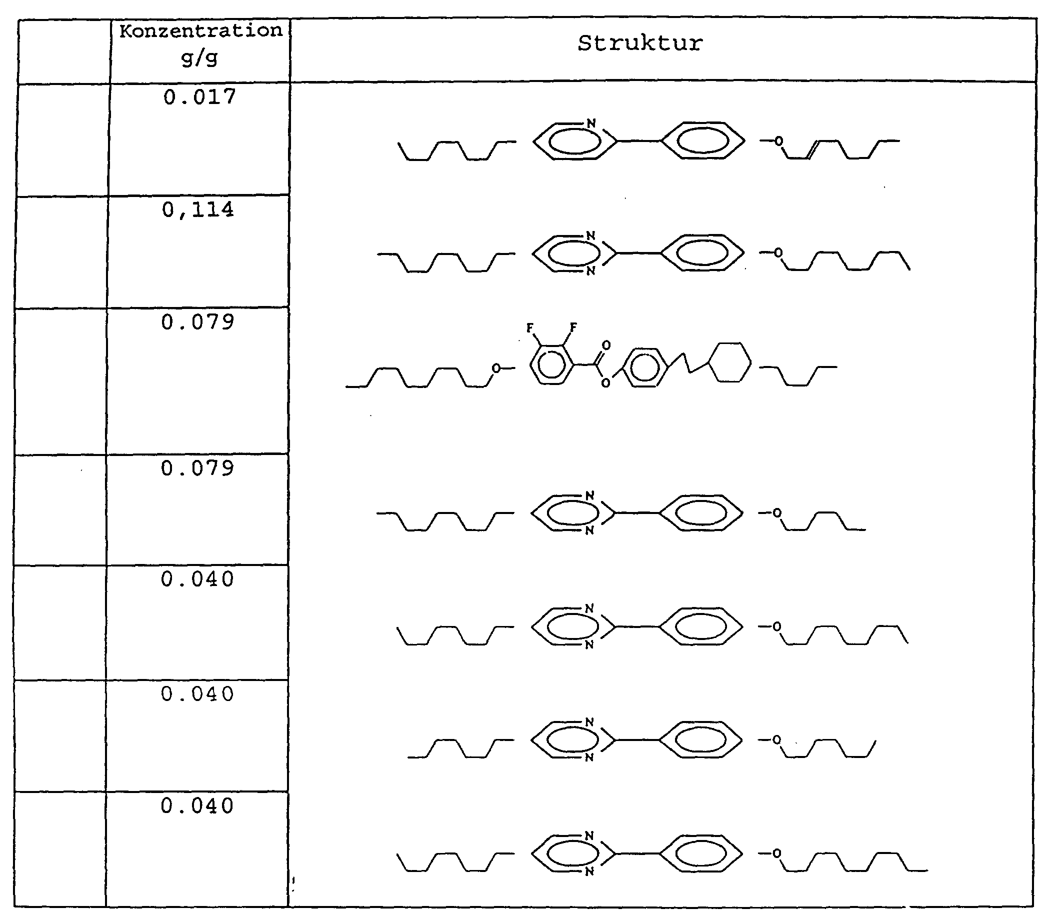

## Patentansprüche

1. Bistabile Flüssigkristallzelle mit einer ferroelektrischen, chiral-smektischen, doppelbrechenden Flüssigkristallschicht (21) und Polarisatormittel, wobei die Zelle (20) ein Paar die Flüssigkristallschicht (21) einschliessender paralleler Platten (22,23) besitzt, von denen jede mit einer die Moleküle der Flüssigkristallschicht (21) ausrichtenden Oberflächenstruktur und einer Elektrode (26, 27) zur Erzeugung eines elektrischen Feldes versehen ist, und wobei die Flüssigkristallschicht (21) eine Schichtdicke d, eine spontane Polarisation Pₛ > 50nC/cm² und einen gesättigten Schaltwinkel α > 45° aufweist, **dadurch gekennzeichnet, dass** die Flüssigkristallschicht (21) polymerisierte Moleküle enthält und dass die Schichtdicke d grösser ist als die Helixganghöhe p der unpolymerisierten Flüssigkristallschicht in zellfreiem Zustand.

2. Flüssigkristallzelle nach Anspruch 1, wobei zum Schalten zwischen den zwei stabilen Lagen des Direktors eine Schwellenspannung Uₛ nicht unterschritten werden darf, **dadurch gekennzeichnet, dass** sich die Beträge der zwei zum Erreichen der beiden bistabilen Lagen bestimmten Schwellenspannungen Uₛ um nicht mehr als 20% voneinander unterscheiden.

3. Flüssigkristallzelle nach Anspruch 1 oder 2, **gekennzeichnet durch** einen spezifischen elektrischen Widerstand ρ, der bei Zimmertemperatur höchstens 2·10⁹Ωm, vorzugsweise höchstens 10⁹ Ωm beträgt.

4. Flüssigkristallzelle nach einem der Ansprüche 1 bis 3, wobei zur Bildung von dieser die Flüssigkristallschicht (21) mittels Licht und einem elektrischen Wechselfeld formiert wird, und wobei die so formierte Flüssigkristallschicht (21) dann in elektrisch gesättigtem Zustand vorliegt, wenn bei der Formierung der Zelle (20) weder der Drehwinkel des Brechungsindexellipsoides noch der Betrag der Doppelbrechung Δn durch eine Erhöhung der Wechselspannung merklich geändert wird, **dadurch gekennzeichnet, dass** die beiden bistabilen Schaltzustände im formierten Zustand einen Schaltwinkel α einschliessen, der um mindestens 7° kleiner ist, als der Schaltwinkel α, der bei gesättigtem Schalten beobachtet wird, und dass der Betrag der Doppelbrechung Δn der beiden bistabilen Zustände mindesten 5% kleiner ist, als bei der elektrisch gesättigten Flüssigkristallschicht.

5. Flüssigkristallzelle nach einem der Ansprüche 1 bis 4, **gekennzeichnet durch** zwei zueinander senkrecht angeordnete Polarisatoren (24,25).

6. Flüssigkristallzelle nach einem der Ansprüche 1 bis 5, **dadurch gekennzeichnet, dass** die Flüssigkristallschicht (21) 1 bis 20 Gew.% polymerisierte Verbindungen enthält.

7. Flüssigkristallzelle nach einem der Ansprüche 1 bis 6, **dadurch gekennzeichnet, dass** der gesättigte Schaltwinkel α grösser als 50°, vorzugsweise grösser als 60°, ist.

8. Flüssigkristallzelle nach einem der Ansprüche 1 bis 7, **dadurch gekennzeichnet, dass** die beiden Platten (22,23) wahlweise aus Glas oder einem flexiblen Kunststoff bestehen.

9. Verfahren zur Herstellung einer Flüssigkristallzelle gemäss einem der Ansprüche 1 bis 8, **dadurch gekennzeichnet, dass** eine ferroelektrische Flüssigkristall-Mischung in unpolymerisiertem Zustand in eine vorbereitete Zelle gefüllt wird, dass diese Zelle zur Polymerisation von beiden Seiten mit Licht gleicher Stärke beleuchtet wird und dass während des Polymerisationsprozesses eine symmetrische Wechselspannung an die Zelle angelegt wird.

10. Verfahren nach Anspruch 9, **gekennzeichnet durch** eine Wechselspannung mit einer Amplitude, die um höchstens 10% kleiner ist als die Amplitude der Sättigungsspannung, und einer Periode, welche kleiner ist, als die Zeit, in der etwa 0,1% der Polymerisationsreaktion abläuft.

11. Anzeigemittel enthaltend eine Flüssigkristallzelle nach einem der Ansprüche 1 bis 8.

12. Anzeigemittel nach Anspruch 11, wobei dieses eine Tafel zur Anzeige von Daten und Informationen ist.

13. Karte enthaltend eine Flüssigkristallzelle nach einem der Ansprüche 1 bis 8, wobei die Platten der Zelle aus flexiblem Kunststoff bestehen.

14. Karte nach Anspruch 13, wobei diese eine Bank- oder Kreditkarte, oder eine Ausweiskarte ist.

## Claims

1. A bistable liquid crystal cell having a ferroelectric, chiral smectic, birefringent liquid crystal layer (21) and polarizer means, the cell (20) having a pair of parallel plates (22, 23) which enclose the liquid crystal layer (21) and each of which is provided with a surface structure orienting the molecules of the liquid crystal layer (21) and with an electrode (26, 27) for generating an electric field, and the liquid crystal layer (21) having a layer thickness d, a spontaneous polarization Pₛ > 50 nC/cm² and a saturated switching angle α > 45°, wherein the liquid crystal layer (21) contains polymerized molecules and wherein the layer thickness d is greater than the helix pitch p of the unpolymerized liquid crystal layer in the cell-free state.

2. A liquid crystal cell as claimed in claim 1, where the voltage may not fall below a threshold voltage Uₛ for switching between the two stable positions of the director, wherein the magnitudes of the two threshold voltages Uₛ intended for reaching the two bistable positions differ from one another by not more than 20%.

3. A liquid crystal cell as claimed in claim 1 or 2, which comprises a resistivity ρ which is at most 2·10⁹ Ωm, preferably at most 10⁹ Ωm, at room temperature.

4. A liquid crystal cell as claimed in any of claims 1 to 3, the liquid crystal layer (21) being formed by means of light and an alternating electric field for the formation of said cell, and the liquid crystal layer (21) formed in this manner being present in the electrically saturated state when, during the forming of the cell (20), neither the angle of rotation of the refractive index ellipsoid nor the magnitude of the birefringence Δn is markedly changed by an increase in the AC voltage, wherein the two bistable switching states in the formed state enclose a switching angle α which is at least 7° smaller than the switching angle α observed in the case of saturated switching, and wherein the magnitude of the birefringence Δn of the two bistable states is at least 5% smaller than in the case of the electrically saturated liquid crystal layer.

5. A liquid crystal cell as claimed in any of claims 1 to 4, which comprises two polarizers (24, 25) arranged perpendicular to one another.

6. A liquid crystal cell as claimed in any of claims 1 to 5, wherein the liquid crystal layer (21) contains 1 to 20% by weight of polymerized compounds.

7. A liquid crystal cell as claimed in any of claims 1 to 6, wherein the saturated switching angle α is greater than 50°, preferably greater than 60°.

8. A liquid crystal cell as claimed in any of claims 1 to 7, wherein the two plates (22, 23) alternatively consist of glass or flexible plastic.

9. A process for the production of a liquid crystal cell as claimed in any of claims 1 to 8, wherein a ferroelectric liquid crystal mixture in the unpolymerized state is filled into a prepared cell, wherein this cell is illuminated from both sides with light of equal intensity for the polymerization and wherein a symmetrical AC voltage is applied to the cell during the polymerization process.

10. A process as claimed in claim 9, which comprises using an AC voltage having an amplitude which is at most 10% smaller than the amplitude of the saturation voltage and a period which is shorter than the time in which about 0.1% of the polymerization reaction takes place.

11. A display means containing a liquid crystal cell as claimed in any of claims 1 to 8.

12. A display means as claimed in claim 11, which is a board for displaying data and information.

13. A card containing a liquid crystal cell as claimed in any of claims 1 to 8, the plates of the cell consisting of flexible plastic.

14. A card as claimed in claim 13, which is a bank or credit card or a pass card.

## Revendications

1. Cellule à cristaux liquides bistables avec une couche cristalline ferro-électrique, chiralo-smectique, biréfringente (21) et des moyens de polarisation, dans laquelle la cellule (20) possède une paire de plaques (22, 23) parallèles renfermant la couche de cristaux liquides (21), dont chacune est dotée d'une structure de surface orientant les molécules de la couche de cristaux liquides (21) et d'une électrode (26, 27) pour générer un champ électrique, et dans laquelle la couche de cristaux liquides (21) présente une épaisseur de couche d, une polarisation spontanée Pₛ > 50 nC/cm² et un angle de commutation saturé α > 45°, **caractérisée en ce que** la couche de cristaux liquides (21) contient des molécules polymérisées et **en ce que** l'épaisseur de couche d est supérieure à la hauteur p du pas de l'hélice de la couche de cristaux liquides non polymérisée à l'état non intégré en cellule.

2. Cellule à cristaux liquides selon la revendication 1, dans laquelle, pour basculer entre les deux positions stables du directeur, on ne doit pas passer en dessous d'une tension de seuil Uₛ, **caractérisée en ce que** les valeurs des deux tensions de seuil U_{S} fixées pour atteindre les deux positions bistables ne diffèrent pas de plus de 20% l'une par rapport à l'autre.

3. Cellule à cristaux liquides selon la revendication 1. ou la revendication 2, **caractérisée par** une résistance électrique spécifique ρ valant au maximum 2·10⁹ Ωm, de préférence au maximum 10⁹ Ωm, à la température ambiante.

4. Cellule à cristaux liquides selon l'une des revendications 1 à 3, dans laquelle, pour former ladite cellule, la couche de cristaux liquides (21) est formée au moyen de lumière et d'un champ électrique alternatif et la couche de cristaux liquides (21) ainsi formée est alors présente à l'état électriquement saturé lorsque, au cours de la formation de la cellule (20), ni l'angle de rotation de l'ellipsoïde de l'indice de réfraction ni la valeur de la biréfringence ΔN ne sont modifiés de manière perceptible par une élévation de la tension alternative, **caractérisée en ce que** les deux états de commutation bistables à l'état formé s'inscrivent dans un angle de commutation α plus petit d'au moins 7° que l'angle de commutation α observé à la commutation saturée, et **en ce que** la valeur de la biréfringence ΔN des deux états bistables est inférieure d'au moins 5% à celle de la couche de cristaux liquides électriquement saturée.

5. Cellule à cristaux liquides selon l'une des revendications 1 à 4, **caractérisée par** deux polariseurs (24, 25) disposés perpendiculairement l'un par rapport à l'autre.

6. Cellule à cristaux liquides selon l'une des revendications 1 à 5, **caractérisée en ce que** la couche de cristaux liquides (21) contient de 1 à 20% en poids de liaisons polymérisées.

7. Cellule à cristaux liquides selon l'une des revendications 1 à 6, **caractérisée en ce que** l'angle de commutation saturé α est supérieur à 50°, de préférence supérieur à 60°.

8. Cellule à cristaux liquides selon l'une des revendications 1 à 7, **caractérisée en ce que** les deux plaques (22, 23) sont composées au choix de verre ou d'une matière plastique souple.

9. Procédé de fabrication d'une cellule à cristaux liquides selon l'une des revendications 1 à 8, **caractérisé en ce que** l'on remplit une cellule préalablement préparée avec un mélange de cristaux liquides ferro-électriques à l'état non polymérisé, **en ce que** l'on insole cette cellule des deux côtés avec de la lumière d'intensité égale pour la polymérisation et **en ce que**, au cours du processus de polymérisation, on applique une tension alternative symétrique à la cellule.

10. Procédé selon la revendication 9, **caractérisé par** une tension alternative dont l'amplitude est au maximum inférieure de 10% à l'amplitude de la tension de saturation et dont la période est plus courte que le temps nécessaire pour que 0,1% environ de la réaction de polymérisation ait lieu.

11. Moyen d'affichage contenant une cellule à cristaux liquides selon l'une des revendications 1 à 8.

12. Moyen d'affichage selon la revendication 11, dans lequel ledit moyen est un panneau d'affichage de données et d'informations.

13. Carte contenant une cellule à cristaux liquides selon l'une des revendications 1 à 8, dans laquelle les plaques de la cellule sont en matière plastique souple.

14. Carte selon la revendication 13, dans laquelle ladite carte est une carte bancaire ou carte de crédit ou bien une carte d'identité.
